# EUROPEAN PATENT APPLICATION

(11) **EP 0 690 093 A1**
(43) Date of publication of application: **03.01.1996**
(21) Application number: 95304521.8
(22) Date of filing: 27.06.1995
(51) Int. Cl.: C08K 5/15, C08L 23/04, C08J 5/18, B32B 27/32

(54) **Packaging film for retorted food**

(30) Priority: 01.07.1994 JP 151228/94
(71) Applicant: SUMITOMO CHEMICAL COMPANY, LIMITED, Osaka (JP)
(72) Inventor: Hayashida, Haruo, Chiba-shi, Chiba (JP); Nomura, Ryoichi, Ichihara-shi, Chiba (JP); Koyama, Satoru, Sodegaura-shi, Chiba (JP)
(74) Representative: Woods, Geoffrey Corlett

(57) **Abstract**

The present invention provides a packaging film for retorted food comprising 100 parts by weight of an ethylene-α-olefin copolymer and at least 0.05 parts by weight of a dibenzylidenesorbitol derivative, said ethylene-α-olefin copolymer comprising ethylene and an α-olefin having 3 to 18 carbon atoms and having a density of 0.930 to 0.940 g/cm³ and a melt flow rate of 0.1 to 50 g/10 minutes at temperature of 190°C under a load of 2.16 kg.

## Description

The present invention relates to a packaging film for retorted food.

Retort means a treatment of food by heat-sterilizing apparatus, and packaging films for retorted food are widely used as materials for packaging a heat-sterilized food.

Various properties such as barrier properties against oxygen, water content, ultraviolet rays and bacteria, heat resistance, sealing properties, workability and hygienic properties are required for such packaging films for retorted food to maintain the sterility until consumption of food. In order to satisfy these complex requirements, polyester or nylon having good barrier properties is used as an outer layer and polyethylene or polypropylene having good heat sealing properties is used as an inner layer, and these are adhered and laminated to each other to obtain packaging films for retorted food. The laminate film thus obtained is desired to be transparent so that the contents of said laminate film are clearly visible.

Retorted foods are manufactured by packaging and sealing foods completely in a packaging film, and then by heat-sterilizing foods in a packaging film at high temperature for constant time. Thus, the packaging films for retorted food are required to have excellent heat resistance against the heat-sterilizing treatment.
Hitherto, polypropylene films have been used for packaging films for retorted food in case of heat-sterilizing at temperature above 110°C. However, distribution of retorted food in the frozen state being demanded recently, an improvement of impact resistance at low temperature has been demanded to protect a package from damage or tears due to a drop of the package in the frozen state and so on.

Copolymerization with small quantity of ethylene is a typical method for improving impact resistance of polypropylene at low temperature. But even this method can not improve impact resistance sufficiently.

On the other hand, polyethylene has good impact resistance, but polyethylene has poor heat resistance and is whitened by heating. In order to prevent such whitening, it is necessary to lower temperature in retorting. This may result in insufficient sterilization or extension of the time for sterilization to lower the working efficiency.

The present inventors have found that a packaging film comprising a specific ethylene-α-olefin copolymer and a dibenzylidenesorbitol derivative has excellent impact resistance at low temperature and good heat resistance, is free from whitening, has favourable transparency and extrusion workability and has heat-sealing properties when used as a composite film.

The present invention provide a packaging film for retorted food comprising 100 parts by weight of an ethylene-α-olefin copolymer and at least 0.05 parts by weight of a dibenzylidenesorbitol derivative, said ethylene-α-olefin copolymer comprising ethylene and an α-olefin having 3 to 18 carbon atoms and havihg a density of 0.930 to less than 0.940 g/cm³ and a melt flow rate of 0.1 to 50 g/10 minutes at a temperature of 190°C under a load of 2.16 kg.

Examples of α-olefin having 3 to 18 carbon atoms are, for example, propylene, 1-butene, 4-methyl-1-pentene, 1-hexene, 1-octene or 1-decene. These α-olefins may be used alone or in combination.

The content of the α-olefin is, generally, 1 to 10% by weight, preferably 1 to 8% by weight. When the content is less than 1% by weight, impact resistance may become poor, whereas when the content is greater than 10% by weight, heat fusion may occur in retorting.

The melt flow rate of the ethylene-α-olefin copolymer is 0.1 to 50 g/10 minutes, preferably 1 to 30 g/10 minutes at temperature of 190°C under a load of 2.16 kg. When the melt flow rate is less than 0.1 g/10 minutes, melt viscosity becomes excessively high and thereby extrusion workability becomes poor, whereas when the melt viscosity is greater than 50 g/10 minutes, heat-sealing strength when used as a composite film becomes poor.

The density of the ethylene-α-olefin copolymer is 0.930 to less than 0.940 g/cm³, preferably 0.930 to 0.938 g/cm³. When the density is less than 0.930 g/cm³, heat resistance becomes poor, whereas when the density is not less than 0.940 g/cm³, impact resistance becomes poor.

The ethylene-α-olefin copolymer of the invention may be prepared, for example, by ionic polymerization.

More specifically, the ethylene-α-olefin copolymer may be prepared by ionic polymerizing ethylene and α-olefin having 3 to 18 carbon atoms with a heterogeneous transition metal catalyst such as TiCl₃ or a homogeneous catalyst such as a metallocene in the presence or absence of a solvent such as cyclohexane in a gas-solid phase, a liquid-solid phase or a homogeneous liquid phase. The temperature and pressure for polymerization are preferably 30 to 300°C and ambient pressure to 3,000 kg/cm, respectively.

The packaging film for retorted food of the present invention comprises 100 parts by weight of the ethylene-α-olefin copolymer thus obtained and at least 0.05 parts by weight of a dibenzylidenesorbitol derivative.

The dibenzylidenesorbitol derivative is preferably a 1.3,2.4-dibenzylidenesorbitol derivative. The benzylidene moieties are preferably unsubstituted or substituted by C₁₋₄ alkyl or halogen, preferably at the para-position.

Examples of the dibenzylidenesorbitol derivative are, for example, 1.3,2.4-dibenzylidenesorbitol, 1.3,2.4-di-p-methylbenzylidenesorbitol, 1.3,2.4-di-p-ethylbenzylidenesorbitol, 1,3-p-methylbenzylidene-2,4-p-chlorobenzylidenesorbitol, 1,3-p-methylbenzylidene-2,4-p-chlorobenzylidenesorbitol, 1,3-p-methylbenzylidene-2,4-p-isopropylbenzylidenesorbitol, 1,3-benzylidene-2,4-p-isopropylbenzylidenesorbitol, 1,3-p-methylbenzylidene-2,4-p-ethylbenzylidenesorbitol, 1,3-benzylidene-2,4-p-ethylbenzylidenesorbitol, 1,3-benzylidene-2,4-p-methylbenzylidenesorbitol, 1,3-p-ethylbenzylidene-2,4-p-methylbenzylidenesorbitol, 1,3-p-methylbenzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-chlorobenzylidene-2,4-p-methylbenzylidenesorbitol, 1,3-p-methylbenzylidene-2,4-benzylidenesorbitol, 1,3-benzylidene-2,4-p-ethylbenzylidenesorbitol, 1,3-p-ethylbenzylidene-2,4-benzylidenesorbitol, 1,3-benzylidene-2,4-p-chlorobenzylidenesorbitol, 1,3-p-chlorobenzylidene-2,4-p-benzylidenesorbitol, 1,3-p-ethylbenzylidene-2,4-p-chlorobenzylidenesorbitol, and 1,3-p-chlorobenzylidene-2.4-p-ethylbenzylidenesorbitol. Especially 1.3,2.4-dibenzylidenesorbitol, 1.3,2.4-di-p-methylbenzylidenesorbitol and 1.3,2.4-di-p-ethylbenzylidenesorbitol are preferable.

The content of the dibenzylidenesorbitol derivative is at least 0.05 parts by weight, preferably 0.05 to 0.30 parts by weight, more preferably 0.15 to 0.20 parts by weight per 100 parts by weight of the ethylene-α-olefin copolymer. When the content of the dibenzylidenesorbitol derivative is less than 0.05 parts by weight, it is not sufficient to prevent whitening during retorting, whereas when the content is greater than 0.30 parts by weight, it is not applicable to food-packaging films according to the standards of Food and Drug Administration (FDA).

The method of manufacturing packaging film for retorted food of the present invention is not restricted. The packaging film may be manufactured, for example, by mixing the ethylene-α-olefin copolymer with the dibenzylidenesorbitol derivative, and further with an antioxidant, a lubricant, an anti-blocking agent, an anti-static agent and/or a neutralizing agent according to demand, with a single-screw extruder, a twin-screw extruder or a Banbury mixer to obtain a resin composition and processing said resin composition to form a film by blow extrusion or with a T-die.

A plurality of the film thus obtained or a combination of the film with another film composed of a thermoplastic resin may be co-extruded to form a multi-layered film.

Examples of the co-extruded films are, for example, the laminate film comprising the packaging film of the invention as a middle layer and films containing no dibenzylidenesorbitol derivative as both outer layers.

A package for retorted food can be manufactured by bonding above-mentioned packaging film or the co-extruded multi-layered film including above-mentioned packaging film as an inner layer to another film, e.g. a film of nylon or poly(ethylene terephthalate), with excellent barrier properties as an outer layer.

The present invention provides a packaging film for retorted food having excellent impact resistance at low temperature and good heat resistance, which is free from whitening, and further has favourable transparency and extrusion workability and has heat-sealing properties when used as a composite film.

### EXAMPLES

The invention is further described in detail according to preferable examples, although the examples below are only illustrative and not restrictive in any sense.

Physical properties of the components, the composition, and the film are measured in the following manner:
(1) Density
   The density was measured in conformity with JIS K6760 (ASTM-D792). The polypropylene pressed sheet of Reference Example 7 was measured at 230°C without annealing.
(2) Melt flow rate (MFR)
   Melt flow rates in this specification including the accompanying claims are as measured in conformity with JIS K6760 (ASTM-D1238) at a temperature of 190°C under a load of 2.16 kg. The polypropylene of Reference Example 7 was measured at 230°C.
(3) Haze (transparency)
   The haze was measured in conformity with ASTM D1003.
(4) Δ Haze (heat resistance: whitening properties)
   A 10cm x 10cm plastic bag was prepared by bonding the packaging film for retorted food to a nylon or poly(ethylene terephthalate) base with an adhesive for dry laminating. Water was heat-sealed in the plastic bag under reduced pressure. The plastic bag with water sealed therein was retorted at 120 °C for 30 minutes with a retorting high-pressure steam sterilizer (manufactured by Alp Corporation). The degree of whitening through the retorting process was expressed as the difference of haze ( Δ haze) before and after the retorting process. The smaller Δ haze shows the less whitening and more preferable heat resistance.

### Example 1

A resin composition was prepared by mixing 100 part by weight of ethylene-1-hexene copolymer (manufactured by Sumitomo Chemical Co., Ltd.: MFR=2.0 g /10 min, density=0.937 g/cm³) with 0.200 parts by weight of a benzylidenesorbitol derivative EC-1 (1.3, 2.4-dibenzylidenesorbitol manufactured by EC Chemical Industries Inc.), 0.1 part by weight of silica (anti-blocking agent), and 0.03 parts by weight of erucamide (lubricant). The resin composition was extruded from a T-die (die width: 600 mm; die lip: 0.7 mm) attached to a 50 mmφ extruder at the die temperature of 240 °C and the extrusion rate of 10 kg/hr. The extruded film was cooled with a 600 mmφ semi-mat roll regulated at the temperature of 50 °C to obtain a film of 60 µm in thickness. A packaging film for retorted food was then prepared by bonding the film thus obtained to a nylon base according to the dry laminating process. Haze and degree of whitening were measured for the packaging film thus obtained. The results are shown in Table 1.

### Examples 2 to 5 and References 1 to 7

Packaging films were prepared in the same manner as Example 1 except that the conditions were changed as shown in Table 1 to 3 . In Example 5, a combination of 50 mmφ extruder with a 40 mmφ extruder for the feed block process was used to prepare a co-extruded three-layered film (thickness: 5/50/5 µm) using the dibenzylidenesorbitol derivative only in its middle layer. In Example 5 the polymer used in both the inner and outer layers was ethylene-1-hexene. The results are shown in Tables 1 to 3.

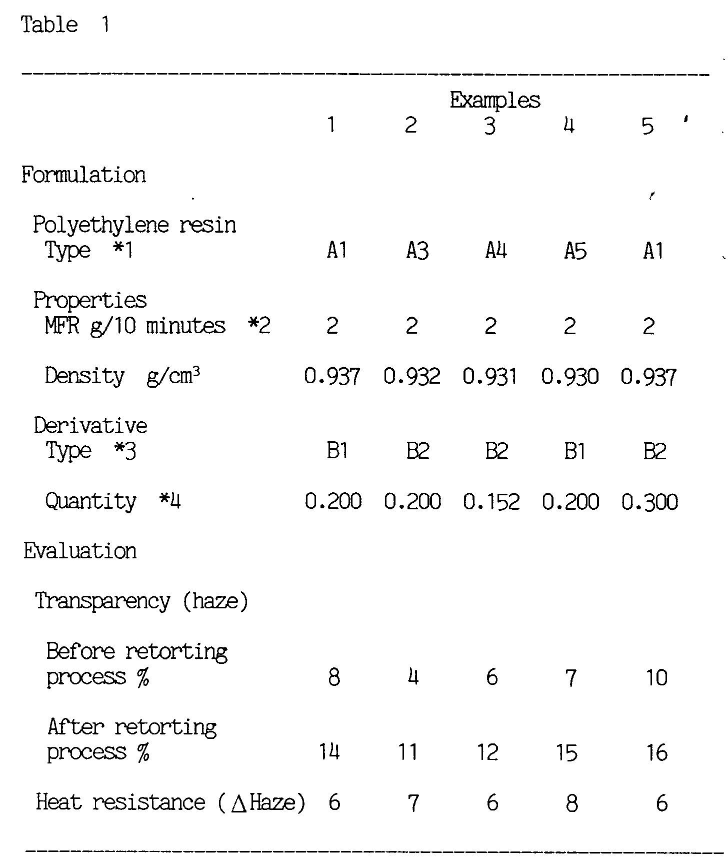

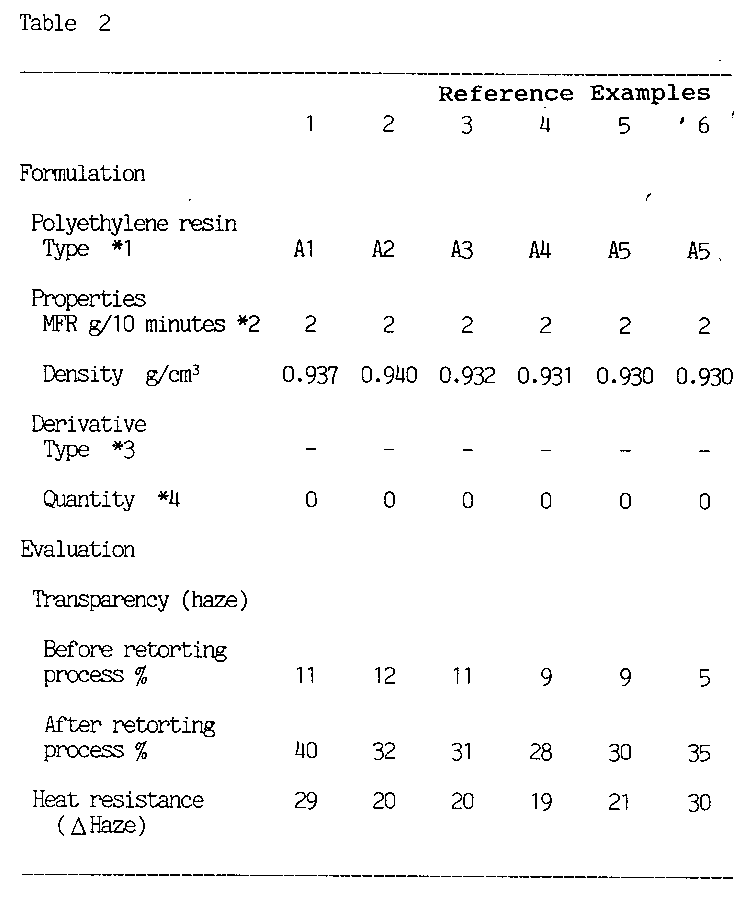

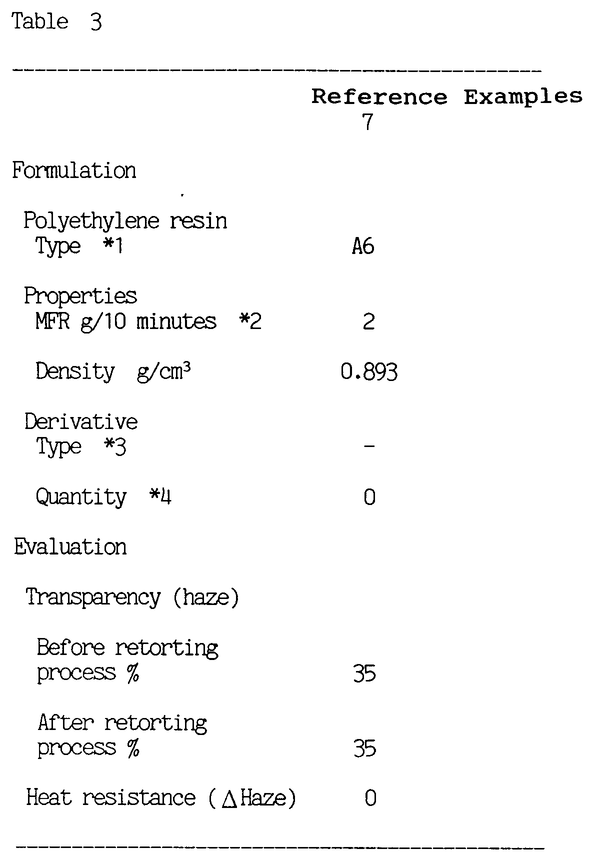

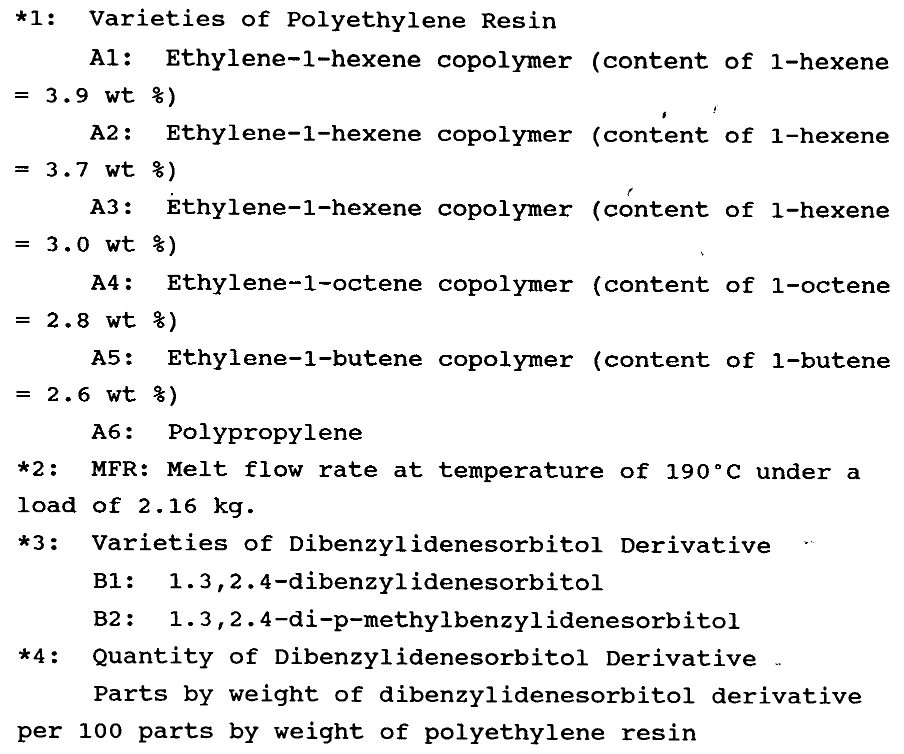

## Claims

1. A packaging film for retorted food comprising 100 parts by weight of an ethylene-α-olefin copolymer and at least 0.05 parts by weight of a dibenzylidenesorbitol derivative, said ethylene-α-olefin copolymer comprising ethylene and an α-olefin containing 3 to 18 carbon atoms and having a density of 0.930 to less than 0.940 g/cm³ and a melt flow rate of 0.1 to 50 g/10 minutes at a temperature of 190°C under a load of 2.16 kg.

2. A packaging film according to claim 1, wherein the density of the ethylene-α-olefin copolymer is 0.930 g/cm³ to 0.938 g/cm³.

3. A packaging film according to claim 1 or 2 wherein the ethylene-α-olefin copolymer has a melt flow rate of 1 to 30 g/10 minutes at a temperature of 190°C under a load of 2.16 kg.

4. A packaging film according to any one of the preceding claims, wherein the α-olefin in the ethylene-α-olefin copolymer is propylene, 1-butene, 1-hexene or 1-octene.

5. A packaging film according to any one of the preceding claims, wherein the content of the dibenzylidenesorbitol derivative is 0.15 to 0.20 parts by weight.

6. A packaging film according to any one of the preceding claims, wherein the dibenzylidenesorbitol derivative is 1.3,2.4-dibenzylidenesorbitol or 1.3,2.4-di-p-methylbenzylidenesorbitol.

7. A packaging film according to any one of the preceding claims wherein the content of the α-olefin in the ethylene-α-olefin copolymer is 1 to 10% by weight.

8. A co-extruded multi-layered film obtained by co-extrusion of a packaging film according to any one of the preceding claims as a middle layer and films containing no dibenzylidenesorbitol derivative as both outer layers.

9. A laminate comprising a film according to any one of the preceding claims and a film having favourable barrier properties.

10. A package for retorted food obtained by bonding a film according to any one of claims 1 to 8 as an inner layer to another film with favourable barrier properties as an outer layer with an adhesive.

11. A package according to claim 10, wherein the film with favourable barrier properties comprises a nylon film or a poly(ethylene terephthalate) film.
